# EUROPÄISCHE PATENTSCHRIFT

(11) **EP 1 868 856 B1**
(45) Veröffentlichungstag und Bekanntmachung des Hinweises auf die Patenterteilung: **13.01.2010**
(21) Anmeldenummer: 06724344.4
(22) Anmeldetag: 13.04.2006
(51) Int. Cl.: B60R 21/207

(54) **SITZLEHNE UND GASSACKMODUL ZUM EINBAU IN EINE SITZLEHNE**
SEAT BACKREST AND AIRBAG MODULE FOR ASSEMBLY IN A SEAT BACKREST
DOSSIER ET MODULE DE SAC GONFLABLE A INTEGRER A UN DOSSIER

(30) Priorität: 14.04.2005 DE 102005017395
(43) Veröffentlichungstag der Anmeldung: 26.12.2007
(73) Patentinhaber: AUTOLIV DEVELOPMENT AB, 447 80 Vargarda (SE)
(72) Erfinder: GARRET, Gilles, F-76000 Rouen (FR)
(74) Vertreter: Schön, Thilo
(86) Internationale Anmeldenummer: PCT/EP2006/003461
(87) Internationale Veröffentlichungsnummer: WO 2006/108676

(56) Entgegenhaltungen:
- DE-A1- 10 056 961
- DE-U1- 20 017 919
- DE-U1-202004 019 420
- US-A- 5 992 878
- US-A- 6 065 772

## Beschreibung

### Technisches Gebiet der Erfindung

Die Erfindung betrifft eine Sitzlehne nach dem Oberbegriff des Anspruchs 1 und ein Gassackmodul zum Einbau in eine solche Sitzlehne nach dem Oberbegriff des Anspruchs 6.

In der Technik sind sogenannte Seitengassäcke bekannt. Die entsprechenden Gassackmodule sind hierbei in manchen Fällen im Inneren der Seitenwange der Sitzlehne angeordnet und am Rahmen der Sitzlehne befestigt. Im Falle eines Seitencrashs wird der Gasgenerator des Gassackmoduls aktiviert und der Gassack expandiert im wesentlichen in Fahrtrichtung des Kraftfahrzeugs.

### Stand der Technik

Beispielsweise aus der gattungsbildenden US 5 992 878 ist es bekannt, ein U-förmiges Gehäuse für das Gassackmodul vorzusehen, wobei ein Schenkel des U-förmigen Gehäuses zwischen Gassack und der Außenseite der Seitenwange der Sitzlehne angeordnet ist. Somit dient dieser Schenkel als Leitelement, der ein Ausweichen des Gassacks nach außen in einer frühen Expansionsphase verhindert. Das Gehäuse ist über einen inneren Schenkel mit dem Rahmen der Sitzlehne verbunden.

Ferner ist eine Sitzlehne gemäß des Oberbegriffs aus Anspruchs 1 und ein Gassackmodul gemäß des Oberbegriffs aus Anspruchs 6 aus DE 200 17919 U1 bekannt.

Bei Expansion des Gassacks werden relativ große Kräfte vom Gassack in den äußeren Schenkel eingeleitet, so dass das Gehäuse, soll eine Deformation verhindert oder gering gehalten werden, sehr stabil und damit mit großem Gewicht ausgelegt werden muss.

Beispielsweise aus der DE 20 2004 019 420.1 ist eine Sitzlehne mit einem Gassackmodul bekannt, bei der eine äußere Kunststoffschale als Leitelement für den Gassack dient. Beim in dieser Druckschrift gezeigten Ausführungsbeispiel befindet sich zwischen der als Leitelement dienenden Kunststoffschale und dem Gassack ein Schaumstoffelement, welches den Aufprall des expandierenden Gassacks auf das Leitelement dämpft. Hierdurch wird zwar einerseits die Maximalkraft, die auf die Kunststoffschale wirkt, herabgesetzt, hierdurch wird jedoch auch die exakte Führung des Gassacks verschlechtert und gegebenenfalls eine schnelle Expansion behindert. Lässt man ein solches Schaumstoffelement weg, treten zumindest kurzzeitig sehr hohe Kraftspitzen auf, die zu einem Brechen der Kunststoffschale und somit zu einem Verlust der Leitfunktion führen kann.

### Gegenstand der Erfindung

Hiervon ausgehend ist es Aufgabe der Erfindung, eine Sitzlehne bzw. ein Gassackmodul für eine solche Sitzlehne dahingehend weiterzubilden, dass eine gute Führung des expandierenden Gassacks bei hoher Funktionssicherheit und geringem Gewicht erreicht werden kann.

Diese Aufgabe wird durch eine Sitzlehne mit den Merkmalen des Anspruchs 1 bzw. durch einen Gassackmodul mit den Merkmalen des Anspruchs 6 gelöst.

Das Leitelement des Gassackmoduls ist stets direkt oder zumindest indirekt mit dem Rahmen der Sitzlehne verbunden. Hierbei ist es konstruktionsbedingt notwendig, dass die Anbindung des Leitelements an den Rahmen in einem Bereich erfolgt, der relativ weit vom vorderen Ende des Abschnitts des Leitelements, auf den der expandierende Gassack nach außen drückt, entfernt ist. Bedingt durch die Hebelgesetze treten hierdurch bei Expansion des Gassacks im Leitelement sehr hohe Kräfte auf. Erfindungsgemäß ist deshalb am Leitelement ein Verbindungsabschnitt vorgesehen, der im montierten Zustand mit einem starren Lehnenelement der Sitzlehne verbunden ist. Starr heißt hierbei wesentlich starrer als die Polsterung oder der Bezugsstoff.

Hierdurch wird eine sehr viel günstigere Kraftaufteilung erreicht und die Verformung des Leitelements bei Expansion des Gassacks wird deutlich verringert, ohne das Leitelement selbst massiver und damit schwerer ausführen zu müssen. Vorzugsweise ist das eben erwähnte Lehnenelement hierbei eine ohnehin vorhandene äußere Kunststoffschale der Sitzlehne.

Vorzugsweise besteht das Leitelement aus Metall, was aufgrund der duktilen Eigenschaften den Vorteil hat, dass unter Energiedissipation eine geringfügige Deformation erfolgen kann, so dass die Übertragung hoher Kraftspitzen auf das vorzugsweise aus Kunststoff bestehende Lehnenelement verhindert werden. Eine zu starke Verformung des aus Metall bestehenden Leitelements wird wiederum durch die Verbindung mit dem Lehnenelement verhindert.

Nach Anspruch 6 hat das Leitelement einen wenigstens zwei Schenkel aufweisenden Querschnitt, wobei die beiden Schenkel L-förmig zueinander stehen. Hierbei ist der Gasgenerator im Bereich des ersten Schenkels angeordnet, welcher sich im eingebauten Zustand im wesentlichen quer zur Fahrzeug-Längsachse, d.h. parallel zur Vorderfläche der Sitzlehne erstreckt. Der Gasgenerator ist auch, beispielsweise durch einen Bolzen, mit dem Leitelement verbunden. Der zweite Schenkel des Leitelements erstreckt sich im eingebauten Zustand im wesentlichen in Fahrzeug-Längsachse und weist den Verbindungsabschnitt zur Verbindung mit dem Lehnenelement, also insbesondere der äußeren Kunststoffschale, auf.

Weitere bevorzugte Ausführungsformen ergeben sich aus den weiteren Unteransprüchen sowie aus den nun mit Bezug auf die Figuren näher dargestellten Ausführungsbeispielen. Hierbei zeigen:

### Kurzbeschreibung der Zeichnungen

- Figur 1: Einen horizontalen Querschnitt durch die Seitenwange einer Sitzlehne gemäß eines ersten Ausführungsbeispiels,
- Figur 2: ein zweites Ausführungsbeispiel in einer der Figur 1 entsprechenden Darstellung und
- Figur 3: eine Variante des zweiten Ausführungsbeispiels.

### Beschreibung bevorzugter Ausführungsformen

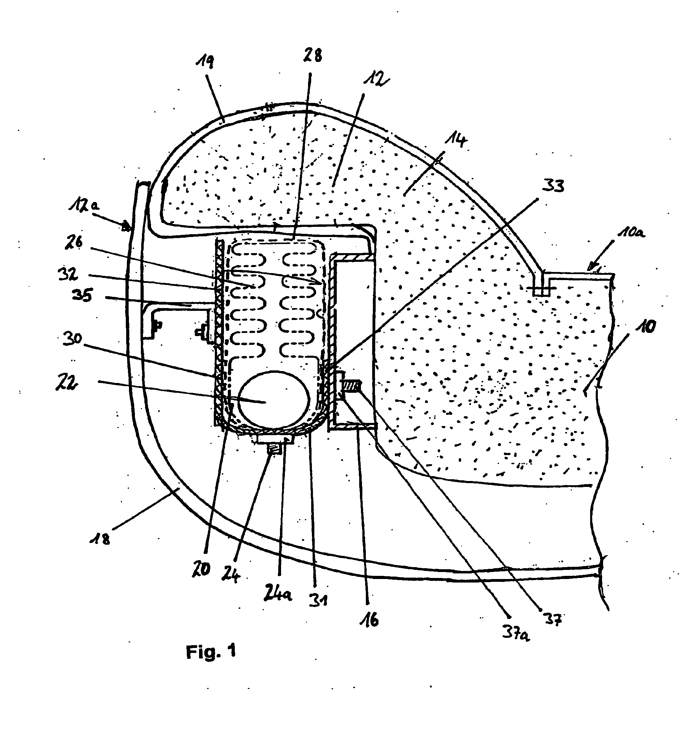

Figur 1 zeigt einen horizontalen Schnitt durch die Seitenwange 12 einer Sitzlehne 10. Im Inneren der Seitenwange 12 ist das Gassackmodul 20 angeordnet und am Rahmen 16 der Sitzlehne 10 starr befestigt. Das Gassackmodul 20 weist den Gasgenerator 22, den Gassack 26, die den Gassack umgebende Hülle 28 und das vorzugsweise aus Stahl bestehende Leitelement 30 auf. Der Querschnitt des Leitelements 30 ist U-förmig mit drei Schenkeln 31,32,33. Hierbei stehen jeweils erster Schenkel 31 und zweiter Schenkel 32 und erster Schenkel 31 und dritter Schenkel 33 L-förmig zueinander. Der Gasgenerator 22 ist mittels ersten Bolzen 24 und ersten Muttern 24a am ersten Schenkel 31 befestigt. Die Befestigung des Leitelements 30 und somit des ganzen Gassackmoduls 20 am Rahmen 16 erfolgt über zweite Bolzen 37, welche sich vom dritten Schenkel 33 durch Bohrungen im Rahmen 16 erstrecken und entsprechende zweite Muttern 37a.

Die eigentliche Leitfunktion wird vom zweiten Schenkel 32 übernommen, der sich vom ersten Schenkel 31 in Fahrzeug-Längsrichtung nach vorne erstreckt und im wesentlichen senkrecht zur Vorderfläche 10a der Sitzlehne steht. Der zweite Schenkel 32 ist über den Verbindungsabschnitt 35 mit der Kunststoffschale 18 verbunden, die sich außen an der Sitzlehne von der Rückseite bis über einen Teil der Außenseite 12a der Seitenwange erstreckt. In diesem Ausführungsbeispiel ist der Verbindungsabschnitt 35 als separates Bauteil gefertigt, der mit dem zweiten Schenkel 32 des Leitelements 30 verbunden, beispielsweise verschraubt ist. Die Verbindung zwischen Verbindungsabschnitt 35 und Kunststoffschale 18 erfolgt hier ebenfalls durch Schrauben, es sind jedoch auch andere Verbindungsmöglichkeiten denkbar. Grundsätzlich ist sogar eine rein klemmende Verbindung denkbar, die jedoch die Gefahr von Klappergeräuschen mit sich bringt.

Bei Betätigung des Gasgenerators 22 expandiert der Gassack 26 und drückt auf den zweiten Schenkel 32. Hierbei wird ein Teil der Kraft über ersten Schenkel und dritten Schenkel in den Rahmen 16 und ein Teil der Kraft über den Verbindungsabschnitt 35 in die Kunststoffschale 18 geleitet. Der zweite Schenkel 32 wird hierdurch nicht oder nur geringfügig ausgelenkt, so dass die Entfaltung des Gassacks nach vorne erfolgt. Der Gassack tritt zwischen der Kunststoffschale 18 und Bezug 19, der auf der Innenseite der Polsterung 14 bis zum Rahmen 16 geführt ist, aus der Seitenwange aus. Die Polsterung 14 wird hierbei nach innen gedrückt. Kunststoffschale 18, Bezug 19 und Polsterung 14 bleiben hierbei unversehrt, was die Reparaturkosten nach einem Auslösen des Gassacks gering hält. Ist der Verbindungsabschnitt 35 mit der Kunststoffschale verschraubt, verklebt oder ähnliches, kann bei Austreten des Gassack aus der Seitenwange ein Teil der auf die Kunststoffschale wirkenden Kräfte auf das Leitelement 30 übertragen werden.

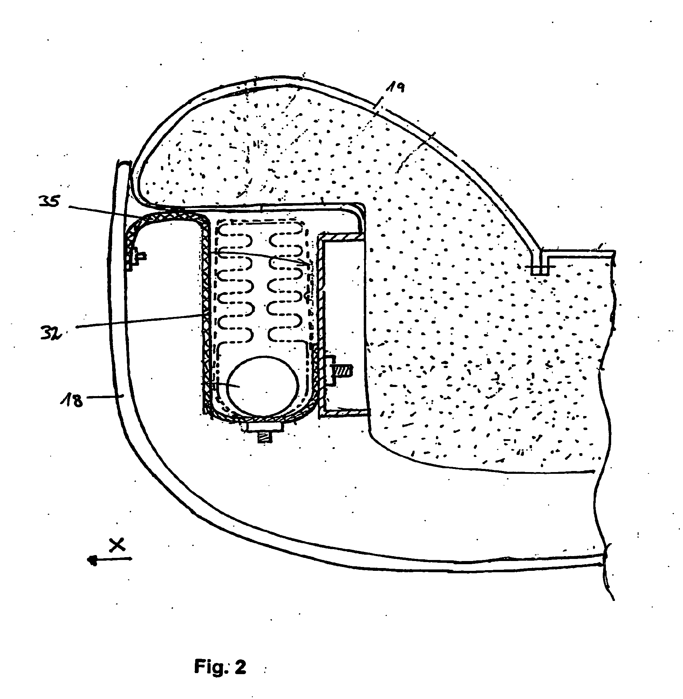

Figur 2 zeigt ein zweites Ausführungsbeispiel. Es unterscheidet sich vom ersten Ausführungsbeispiel dadurch, dass der Verbindungsabschnitt 35 einstückig am zweiten Schenkel 32 angeformt ist. Hierbei ist das vordere Ende des zweiten Schenkels 32 nach außen gebogen und steht in direktem Kontakt mit der Kunststoffschale 18. Hierbei kann eine gewisse Vorspannung erzeugt werden. Da bei Expansion des Gassacks ausschließlich eine Kraft vom zweiten Schenkel 32 auf die Kunststoffschale 18 in X-Richtung übertragen wird, ist eine Verschraubung, Verklebung oder ähnliches des Verbindungsabschnitts 35 an der Kunststoffschale 18 entbehrlich, in der Regel jedoch zu bevorzugen. Vorteil dieser Ausführungsform ist, dass sich der Verbindungsabschnitt 35 aufgrund seiner Formgebung um einen geringen Betrag verformen kann, was die auf das Kunststoffschale übertragene Maximalkraft nochmals verringert.

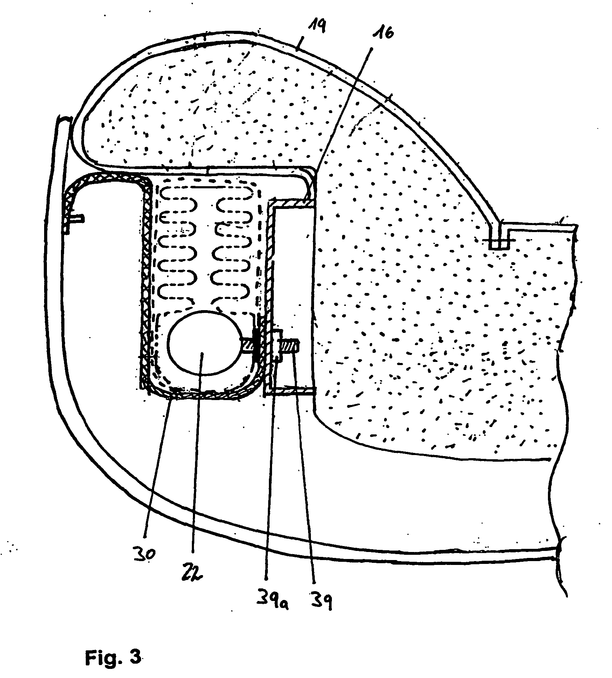

Figur 3 zeigt eine Variante zur Figur 2. Hier dienen gemeinsame Bolzen 39 zusammen mit gemeinsamen Muttern 39a sowohl zur Befestigung des Gasgenerators 22 als auch zur Befestigung des Leitelements 30 am Rahmen 16. Hierdurch werden Teile und somit Gewicht gespart und die Montage vereinfacht. Eine solche Anordnung kann natürlich auch dann gewählt werden, wenn der Verbindungsabschnitt 35 wie im ersten Ausführungsbeispiel ausgestaltet ist.

### Bezugszeichenliste

- 10: Sitzlehne
- 10a: Vorderfläche
- 12: Seitenwange
- 12a: Außenseite der Seitenwange
- 14: Polsterung
- 16: Rahmen
- 18: Kunststoffschale
- 19: Bezug
- 20: Gassack-Modul
- 22: Gasgenerator
- 24: erster Bolzen
- 24a: erste Mutter
- 26: Gassack
- 28: Hülle
- 30: Leitelement
- 31: erster Schenkel
- 32: zweiter Schenkel
- 33: dritter Schenkel
- 35: Verbindungsabschnitt
- 37: zweiter Bolzen
- 37a: zweite Mutter
- 39: gemeinsamer Bolzen
- 39a: gemeinsame Mutter

## Patentansprüche

1. Sitzlehne (10) mit einer eine Außenseite (12a) aufweisenden Seitenwange (12) und einem im Inneren der Seitenwange aufgenommenen Gassack-Modul (20), wobei:
- die Sitzlehne einen Rahmen (16) aufweist, an dem das Gassack-Modul (20) befestigt ist,
- das Gassack-Modul (20) einen Gassack (26), einen Gasgenerator (22) und ein im wesentlichen starres Leitelement (30), das sich zumindest abschnittsweise zwischen Gassack (26) und Außenseite (12a) der Seitenwange befindet, aufweist, und die Sitzlehne im Bereich der Außenseite (12a) der Seitenwange (12) ein im wesentlichen starres Lehnenelement aufweist, **dadurch gekennzeichnet, dass** der sich zwischen Gassack (26) und Außenseite (12a) der Seitenwange (12) befindende Abschnitt (32) des Leitelements einen Verbindungsabschnitt (35) aufweist, der mit dem Lehnenelement verbunden ist.

2. Sitzlehne nach Anspruch 1, **dadurch gekennzeichnet, dass** das Lehnenelement eine äußere Kunststoffschale (18) der Sitzlehne ist.

3. Sitzlehne nach einem der Ansprüche 1 oder 2, **dadurch gekennzeichnet, dass** der Verbindungsabschnitt (35) einstückig mit dem Leitelement (30) ausgebildet ist.

4. Sitzlehne nach einem der vorangehenden Ansprüche, **dadurch gekennzeichnet, dass** sich der Verbindungsabschnitt an einem vorderen Ende des Leitelements befindet.

5. Sitzlehne nach einem der vorangehenden Ansprüche, **dadurch gekennzeichnet, dass** das Leitelement aus Metall besteht.

6. Gassack-Modul zum Einbau in eine Sitzlehne, mit einem Gassack (26), einem Gasgenerator (22) und einem im wesentlichen starren Leitelement (30), dessen Querschnitt wenigstens zwei Schenkel (31,32) aufweist, welche L-förmig miteinander verbunden sind, wobei der Gasgenerator (22) im Bereich eines ersten Schenkels (31) angeordnet und mit dem Leitelement (30) verbunden ist,
**dadurch gekennzeichnet, dass** der zweite Schenkel (32) einen Verbindungsabschnitt (35) zur Verbindung des Leitelements mit einem starren Lehnenelement einer Sitzlehne aufweist.

7. Gassack-Modut nach Anspruch 6, **dadurch gekennzeichnet, dass** am ersten Schenkel (31) weiterhin ein dritter Schenkel (33) angeordnet ist, so dass sich ein U-förmiger Querschnitt ergibt.

8. Gassack-Modul nach Anspruch 7, **dadurch gekennzeichnet, dass** der dritte Schenkel (33) kürzer als der zweite Schenkel (32) ausgebildet ist.

9. Gassack-Modul nach einem der Ansprüche 7 oder 8. **dadurch gekennzeichnet, dass** der Gasgenerator Ober einen gemeinsamen Bolzen (39) mit dem dritten Schenkel (33) verbunden ist und dass dieser gemeinsame Bolzen auch zur Befestigung des Gassack-Moduls am Rahmen eines Fahrzeugsitzes dient.

## Claims

1. Seat backrest (10) with a side cheek (12) having an outer side (12a), and an airbag module (20) accommodated in the interior of the side cheek, in which:
- the seat backrest exhibits a frame (16) onto which the airbag module (20) is fixed,
- the airbag module (20) exhibits an airbag (26), a gas generator (22) and a basically rigid guide element (30) which is located at least in sections between the airbag (26) and the outer side (12a) of the side cheek, and
- the seat backrest exhibits a basically rigid backrest element in the area of the outer side (12a) of the side cheek (12),
**characterised in that** the section (32) of the guide element being located between the airbag (26) and the outer side (12a) of the side cheek (12) exhibits a connecting section (35) which is linked to the backrest element.

2. Seat backrest according to claim 1, **characterised in that** the backrest element is an outer plastic shell (18) of the seat back.

3. Seat backrest according to either claim 1 or claim 2, **characterised in that** the connecting section (35) is formed in one piece with the guide element (30).

4. Seat backrest according to one of the previous claims, **characterised in that** the connecting section is located at a front end of the guide element.

5. Seat backrest according to one of the previous claims, **characterised in that** the guide element consists of metal.

6. Airbag module for installation in a seat backrest, with an airbag (26), a gas generator (22), and a basically rigid guide element (30), whose cross-section exhibits at least two arms (31,32) which are linked with one another in the form of an "L", with the gas generator (22) being located in the area of a first arm (31) and being connected with the guide element (30),
**characterised in that** the second arm (32) exhibits a connecting section (35) for connection of the guide element with a rigid backrest element of a seat backrest.

7. Airbag module according to claim 6, **characterised in that** a third arm (33) is also arranged on the first arm (31), so that a U-shaped cross-section results.

8. Airbag module according to claim 7, **characterised in that** the third arm (33) is shorter than the second arm (32).

9. Airbag module according to one of claims 7 or 8, **characterised in that** the gas generator is connected with the third arm by means of a common bolt (39) and that this common bolt also serves for fixing of the airbag module to the frame of a vehicle seat.

## Revendications

1. Dossier de siège (10) doté d'une joue latérale (12a) comprenant une face extérieure (12a) et d'un module de sac gonflable (20) logé à l'intérieur de la joue latérale :
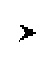 le dossier comprenant un cadre (16) auquel est fixé le module de sa gonflable (20),
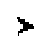 le module de sac gonflable (20) comprenant un sac gonflable (26), un générateur de gaz (22) et un élément directeur (30) sensiblement rigide situé au moins par sections entre le sac gonflable (26) et la face extérieure (12a) de la joue latérale, et
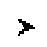 le dossier comprenant dans la zone de la face extérieure (12a) de la joue latérale (12) un élément de dossier sensiblement rigide, **caractérisé en ce que** la section (32) de l'élément directeur située entre le sac gonflable (26) et la face extérieure (12a) de la joue latérale (12) comprend une section de raccordement (35) reliée à l'élément de dossier.

2. Dossier selon la revendication 1, **caractérisé en ce que** l'élément de dossier est une coque extérieure en matière plastiqué (18) du dossier.

3. Dossier selon l'une quelconque des revendications 1 ou 2, **caractérisé en ce que** la section de raccordement (35) est conçue d'un seul tenant avec l'élément directeur (30).

4. Dossier selon l'une quelconque des revendications précédentes, **caractérisé en ce que** la section de raccordement se situe sur une extrémité avant de l'élément directeur.

5. Dossier selon l'une quelconque des revendications précédentes, **caractérisé en ce que** l'élément directeur est constitué de métal.

6. Module de sac gonflable destiné à être intégré dans un dossier de siège, comprenant un sac gonflable (26), un générateur de gaz (22) et un élément directeur (30) sensiblement rigide, dont la section transversale comprend au moins deux branches (31, 32) reliées l'une à l'autre en forme de L, le générateur de gaz (22) étant disposé dans le zone d'une première branche (31) et relié à l'élément directeur (30), **caractérisé en ce que** la deuxième branche (32) comprend une section de raccordement (35) destinée à relier l'élément directeur à un élément de dossier rigide d'un dossier.

7. Module de sac gonflable selon la revendication 6, **caractérisé en ce qu'**une troisième branche (33) est disposée en outre sur la première branche (31), de sorte que cela produise une section transversale en forme de U.

8. Module de sac gonflable selon la revendication 7, **caractérisé en ce que** la troisième branche (33) est plus courte que la deuxième branche (32).

9. Module de sac gonflable selon l'une quelconque des revendications 7 ou 8, **caractérisé en ce que** le générateur de gaz est relié à la troisième branche (33) par un boulon (39) commun et **en ce que** ce boulon commun sert également à fixer le module de sac gonflable au cadre d'un siège de véhicule.
